# EUROPEAN PATENT APPLICATION

(11) **EP 0 914 891 A1**
(43) Date of publication of application: **12.05.1999**
(21) Application number: 98120288.0
(22) Date of filing: 27.10.1998
(51) Int. Cl.: B23D 35/00, B23D 25/04

(54) **Continuous shearing method for tubes and relative continuous shears**

(30) Priority: 07.11.1997 IT UD970202
(71) Applicant: ISPADUE SpA, 33079 Sesto al Reghena (PN) (IT)
(72) Inventor: Buscatti, Giuseppe, 12035 Racconigi (CN) (IT); Poggi, Enzo, 17100 Savona (IT)
(74) Representative: Petraz, Gilberto Luigi

(57) **Abstract**

Continuous shearing method for metallic tubes and similar, wherein a base element (19) to be sheared to size is fed continuously and wherein the shearing organ (18) is assembled on board a trolley movable with alternate motion on a sliding rail (12), the method providing to use at least two trolleys (11a, 11b) aligned on the sliding rail (12) of which when one is working the other is on stand-by and vice versa, the changeover taking place without any interruption in feed of the base element (19) to be sheared to size, the trolleys (11a, 11b) having respective travels ("11", "12"), the trolley momentarily in the stand-by position being at least partly and temporarily removed from the shearing line of the shears (10) so as to perform usual replacement operations of the worn shearing organ (18) or for exceptional maintenance operations caused by breakdowns or malfunctions.

Flying shears suitable to perform the method as described above, the shears comprising at least a trolley (11a), a shearing organ (18) and a clamping organ (20) assembled on board the movable trolley (11a), the shears including at least a second movable trolley (11b) arranged aligned with the movable trolley (11a) on the translation rail (12), the second movable trolley (11b) having a travel ("12") which does not go above the first movable trolley (11a), the first movable trolley (11a) having a working condition mating with the stand-by condition of the second movable trolley (11b) and a stand-by condition mating with the working condition of the second movable trolley (11b), in the respective stand-by conditions the movable trolleys (11a, 11b) being able to be associated with removal means to remove them from the shearing line and displacement means to displace them to a position outside the line for replacement or maintenance operations.

## Description

### FIELD OF THE INVENTION

This invention concerns a continuous shearing method for tubes and the relative continuous shears, as set forth in the respective main claims.

The invention is employed, particularly if not only, in the field of flying shears for metallic and non-metallic tubes which shear to size tubes and profiles starting from a base element fed continuously.

### BACKGROUND OF THE INVENTION

The state of the art includes flying shears suitable to shear to size tubes from a continuous element supplied by feed means, for example floops or reels.

These shears usually comprise a trolley, sliding on a translation rail, on which are mounted the milling disk which shears the tube and the jaw type gripper which clamps the tube and holds it in position before and during the shearing operation.

The trolleys are movable with alternate motion on the translation rail with the purpose of taking the milling disk, at the moment of shearing, to a linear speed compatible with the speed of advance of the tube so that shearing may take place.

To be more exact, the shearing cycle provides that when the tube is recognised as arriving in a set position upstream of the movable trolley, a signal is given to the trolley which starts moving in the direction of feed of the tube.

The advancing tube comes into cooperation with the movable trolley and, when the linear speed of the tube and the speed of the trolley are equal, the tube is gripped by the jaw grippers on board the trolley and is sheared by the milling disk. When shearing has been carried out, the jaw grippers release the tube, the trolley inverts direction, stops at the start-of-cycle position and prepares itself for the subsequent shearing cycle.

The length of the travel of the movable trolley and the minimum length obtainable of the tube depend on the compromise between the trolley's ability to accelerate/decelerate and on the speed at which the tube is fed.

The movable trolley normally slides resting on the translation rail and below the rail there are collection means to collect the chips and dirt which is created during the shearing step.

The trolley is usually driven by a conventional DC motor connected to the trolley by flexible cables.

The need to improve the productivity of these shears has led those working in this field to explore the possibilities of perfecting the shearing sequence and also of maximising the efficiency of the DC motors; however, so far no completely satisfactory results have been achieved, due to the objective constraints which are imposed by the structure of shears such as are known in the state of the art.

These objective constraints mainly concern the structural limits, particularly in terms of the acceleration/deceleration ramp, of the conventional motors and the discontinuity of the feeding and shearing processes.

For some time the state of the art has included a continuous unwinding system which allows to feed the base element from which the tubes are made without discontinuity. In practice, it provides to connect in line the trailing end of the strip wound on the decoiling means operating at that moment with the leading end of the strip of another decoiling means which at that moment is on stand-by, thus ensuring a continuous feed.

This solution, although it is very positive, has shown even more clearly how the continuity of the process is constrained by the rapid wear to which the shearing organs are subject, and how the machine has to be stopped at set intervals with consequent down times, losses in production and discarded product.

This constraint, although it can be improved by carefully choosing extremely resistant materials, constitutes a real obstacle to obtaining a continuous shearing process, an obstacle which is at present insurmountable, with the structure of shears known in the state of the art.

The present Applicant has tested and embodied this invention to overcome this shortcoming which limits the productivity of shears for tubes which are known in the state of the art, and which does not allow to completely exploit the advantages which derive from the technology of continuous feeding which is now available, and also to obtain further advantages.

### SUMMARY OF THE INVENTION

The invention is set forth and characterised in the respective main claims, while the dependent claims describe variants of the idea of the main embodiment.

The purpose of the invention is to provide a continuous shearing method for tubes, and the flying shears which achieve the method, so as to achieve shearing cycles without any interruption for the whole duration of feed available of the continuous base element.

The following description concerns metallic tubes but this does not limit the field of application of the invention which can be employed substantially for any type whatsoever of shearing to size which requires flying shears such as long products in bars, of whatsoever section and profile, even non-metallic.

The flying shears according to the invention have conventional feed means suitable to supply a base element to be sheared to size without any discontinuity for a substantially indefinite length.

According to the invention, the flying shears have at least two trolleys arranged in alignment on the translation rail.

To be more exact, a first trolley has a travel which goes from the beginning of the translation rail substantially to the end of the rail less the space occupied by the second trolley.

The second trolley has a travel which goes substantially from the beginning of the space occupied by the first trolley up to the end of the rail.

If there are three or more trolleys, the translation rail contains the travels of all the trolleys. The two or more trolleys are of a substantially conventional type and work in the conventional manner as described above.

The shears according to the invention always have one trolley working and one trolley on stand-by.

To be more exact, the first trolley, which can be either the one facing the feed means or the one farthest therefrom, performs the shearing to size cycles until the relative shearing organs need replacement or maintenance because they are worn or approaching a worn state.

At that moment, and substantially without any interruption, the second trolley enters into action while the first trolley is disconnected from the shearing line and made to cooperate with means arranged at the side which allow the worker to intervene on the worn shearing organs.

This intervention on the shearing organs can be carried out for the duration of the period when the shearing organs of the second trolley are working, and therefore without any time limit.

In order to facilitate this intervention, one embodiment of the invention provides that the trolley translates inside a guide arranged on the side of the translation rail and then, from this side position, the shearing organ moves into a position facing the outside of the shears and easily accessible for the worker who can carry out the change-over with ease, in safety and with a long time available.

Above all, this change-over or any possible maintenance needed on elements on board the trolley, not necessarily the shearing organs, can take place without interrupting the line and without creating any consequence or pause in the shearing cycle which can continue for a substantially indefinite time.

According to a variant, the at least two trolleys are arranged suspended from a translation rail structured with a beam, and travel on idler wheels along this rail. According to another variant, the trolleys travel supported on the relative rail.

According to a further variant, the drive mechanisms for the trolleys consist of linear motors wherein the magnets, or the coils, are stationary and assembled on the translation rail while the coils, or the magnets, are assembled on board the trolleys.

### BRIEF DESCRIPTION OF THE DRAWINGS

The attached Figures are given as a non-restrictive example, and show a preferential embodiment of the invention as follows:
- Fig. 1: is a side view of the continuous flying shears according to the invention shown in a simplified diagram;
- Fig. 2: is a front view of Fig. 1.

### DETAILED DESCRIPTION OF THE PREFERRED EMBODIMENT

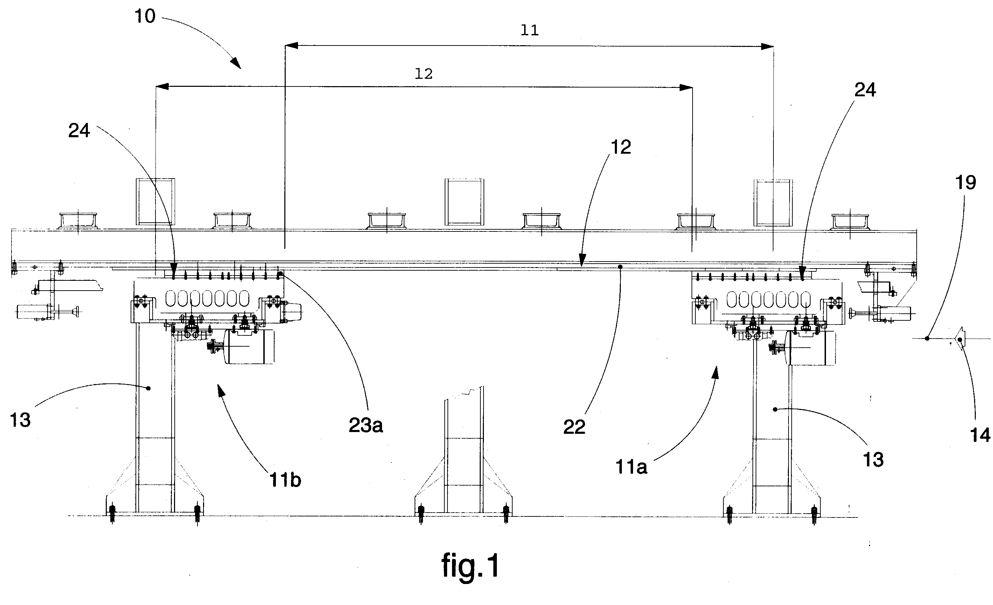

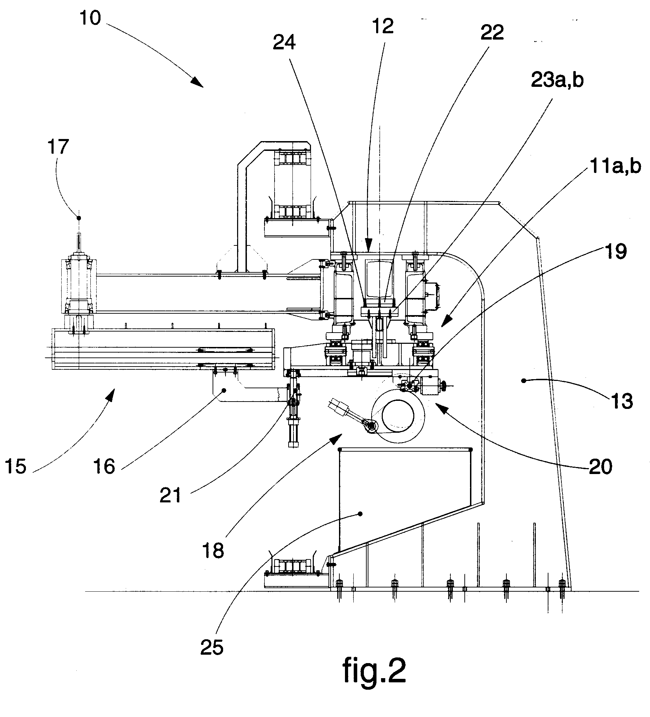

The flying shears 10 which achieve the continuous shearing method according to the invention are shown with two views, side and front, in Figs. 1 and 2.

The shears 10 cooperate upstream with feed means, not shown here, suitable to continuously supply a base element 19, for example a metallic strip, to be continuously sheared according to pre-set and desired measurements.

The base element 19 arrives at the shears 10 in the direction of feed 14.

In this case, the shears 10 have two movable trolleys, 11a and 11b, which travel suspended from a translation rail 12 supported by a multiple structure with vertical beams 13.

The movable trolleys 11a and 11b have respective travels of linear movement "11" and "12", wherein the travel "11" of the first trolley 11a goes from the beginning of the translation rail 12 to the beginning of the space occupied by the second trolley 11b, while the travel "12" of the second trolley 11b goes from the end of the space occupied by the first trolley 11a to the end of the translation rail 12.

Each of the trolleys 11a and 11b has on board, in a substantially conventional manner, a shearing organ 18 of the type with a milling disk and a clamping organ 20 which clamps the advancing base element 19 so that shearing can take place.

Again in a substantially conventional manner, upstream of the shears 10 there are sensors which detect a defined position of the base element 19 fed continuously and supply a send signal to the trolleys 11a, 11b which begin to move in the direction of advance 14 of the base element 19 until they substantially equal the speed of advance of the base element 19 and perform the shearing action in the correct conditions.

When shearing is concluded, the trolley 11a, 11b stops, reverses direction and returns to the start-of-cycle position.

In this case, while the first trolley 11a is in its operating condition and performs in sequence the shearing cycles as described above, the second trolley 11b, aligned with the first, is arranged in a stand-by condition in a desired end-of-travel position. The second trolley 11b in no way interferes with the shearing cycles of the first trolley 11a.

When the shearing organ 18 of the first trolley 11a is worn and needs the usual and expected replacement, or in the event that exceptional, unprogrammed interventions are required due to malfunctions, breakdowns or any other problem, the first trolley 11a is excluded from the shearing cycle and, without any interruption in the feed of the base element 19, the shearing cycles are continued by the second trolley 11b.

The second trolley 11b then moves to the start-of-travel position and performs its shearing cycles in a conventional manner.

During the exclusion step, the invention provides to translate the trolley 11a or 11b, which is momentarily excluded from the shearing cycle, to a position outside the shears 10 so that the necessary replacement and/or maintenance operations are carried out.

In this case, at the side of the beam structure 13 which supports the translation rail 12 on which the trolleys 11a, 11b travel, for each of the trolleys 11a, 11b there is a horizontal guide element 15 inside which the relative trolley 11a, 11b, momentarily inactive, is inserted, by means of the drive arm 16 connected to the trolley 11a, 11b by means of the bracket 21.

The horizontal guide element 15 is suitable to rotate around a vertical axis 17.

When the inactive trolley 11a, 11b is located inside the horizontal guide element 15, this rotation serves to take the shearing organ 18 to a position facing the outside of the shears 10, so that the worker can perform the necessary operations in conditions of complete safety.

During these operations, as already described, the shearing process continues, using the other trolley 11a, 11b.

According to a variant which is not shown here, there are three or more trolleys, located on the translation rail 12.

In this case, the trolleys 11a, 11b are driven by respective linear motors consisting of a stationary magnet-bearing bar 22 associated with the translation rail 12 and of coil-bearing bars 23a and 23b associated with the respective trolleys 11a, 11b.

To protect the linear motors and the translation rail 12 from chips, dust and other dirt caused by the shearing cycle, there are delivery nozzles 24 to deliver jets of air arranged both on the stationary part and on the moving trolleys 11a, 11b.

Underneath the trolleys 11a, 11b there are tank-type containers 25 to collect the chips and dirt caused by the shearing operation.

## Claims

1. Continuous shearing method for metallic tubes and similar, wherein a base element (19) to be sheared to size is fed continuously by feed means and wherein the shearing organ (18) is assembled on board a trolley movable with alternate motion on a sliding rail (12), the shearing being performed when the trolley has achieved the same speed of advance as the base element (19), the trolley returning after the shearing operation to the start-of-cycle position where it is prepared for the subsequent shearing operation, the method being characterised in that it provides to use at least two trolleys (11a, 11b) aligned on the sliding rail (12) of which when one is working the other is on stand-by and vice versa, the changeover taking place without any interruption in feed of the base element (19) to be sheared to size, the trolleys (11a, 11b) having respective travels ("11", "12"), the trolley momentarily in the stand-by position being at least partly and temporarily removed from the shearing line of the shears (10) so as to perform usual replacement operations of the worn shearing organ (18) or for exceptional maintenance operations caused by breakdowns or malfunctions.

2. Method as in Claim 1, characterised in that the procedure to temporarily remove the trolley (11a, 11b) momentarily on stand-by from the shearing line of the shears (10) provides that the trolley (11a, 11b) is inserted inside a guide element (15) arranged at the side of the shears (10).

3. Method as in Claim 1 or 2, characterised in that the guide element (15) is moved, when the trolley (11a, 11b) is inserted therein, so as to make the shearing organ (18) available to the worker in a position facing the outside of the shears (10).

4. Flying shears suitable to continuously perform shearing to size cycles on a base element (19) fed continuously by feed means, the shears comprising at least a trolley (11a) movable with alternate motion on a sliding rail (12), sensor means to recognise the position of the base element (19) and suitable to supply a send signal to the movable trolley (11a) to reach a speed substantially equal to that of the advancing base element (19), a shearing organ (18) and a clamping organ (20) assembled on board the movable trolley (11a) and intervening to carry out the shearing action, the movable trolley (11a) having a travel ("11"), the shears being characterised in that they include at least a second movable trolley (11b) arranged aligned with the movable trolley (11a) on the translation rail (12), the second movable trolley (11b) having a travel ("12") which does not go above the first movable trolley (11a), the first movable trolley (11a) having a working condition mating with the stand-by condition of the second movable trolley (11b) and a stand-by condition mating with the working condition of the second movable trolley (11b), in the respective stand-by conditions the movable trolleys (11a, 11b) being able to be associated with removal means to remove them at least partly from the shearing line of the shears (10) and displacement means to displace them to a position outside the line for replacement or maintenance operations on the components located on board the trolleys (11a, 11b).

5. Shears as in Claim 4, characterised in that they include at least a guide element (15) arranged at the side of the shears (10) and suitable to receive a relative trolley (11a, 11b) momentarily inactive so that the necessary operations of replacement/maintenance can be carried out.

6. Shears as in Claim 5, characterised in that the guide element (15) is movable so as to position the shearing organ (18) assembled on board the trolley (11a, 11b) momentarily inserted in the guide element (15) in a position facing the outside and accessible to the worker.

7. Shears as in any claim from 4 to 6 inclusive, characterised in that the movable trolleys (11a, 11b) are located suspended over the relative translation rail (12).

8. Shears as in any claim from 4 to 6 inclusive, characterised in that the movable trolleys (11a, 11b) are located resting on the relative translation rail (12).

9. Shears as in any claim from 4 to 8 inclusive, characterised in that the movable trolleys (11a, 11b) are associated with respective linear motors.

10. Shears as in Claim 9, characterised in that in cooperation with each linear motor there are nozzles (24) to deliver jets of air to protect the motors and the sliding guides from chips, dust and other dirt.

11. Shears as in any claim from 4 to 10 inclusive, characterised in that underneath the movable trolleys (11a, 11b) there are tank-type means (25) to contain the chips produced during the shearing cycles.
